# EUROPÄISCHE PATENTSCHRIFT

(11) **EP 1 089 533 B1**
(45) Veröffentlichungstag und Bekanntmachung des Hinweises auf die Patenterteilung: **05.06.2013**
(21) Anmeldenummer: 00120016.1
(22) Anmeldetag: 14.09.2000
(51) Int. Cl.: H04M 3/42, H04M 3/46

(54) **Verfahren zur netzweiten Signalisierung einer Anrufübernahme**
Method for network-wide pickup signalling
Procédé de signalisation de réception d' appel dans un réseau

(30) Priorität: 29.09.1999 DE 19946663
(43) Veröffentlichungstag der Anmeldung: 04.04.2001
(73) Patentinhaber: Siemens Enterprise Communications GmbH & Co. KG, 81379 München (DE)
(72) Erfinder: Wappmannsberger, Bernhard, 85540 Ottendichl/Haar (DE)
(74) Vertreter: Fritzsche, Thomas

(56) Entgegenhaltungen:
- DE-A- 19 640 266
- US-A- 3 725 599
- US-A- 5 815 563
- BANDOW ET AL: "Zeichengabesysteme - 2. Auflage" 1995 , L.T.U.-VERTRIEBSGESELLSCHAFT MBH , BREMEN XP002171134 * Seite 80 - Seite 85 *

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen ständig zu. Aus "Das virtuelle Büro", telcomreport, Heft 4, 1997, Siemens AG Berlin und München, ist bekannt, daß für ein effektives Erledigen der Aufgaben außerhalb des Unternehmens ein Zugriff auf die im lokalen Kommunikationsnetz des Unternehmens angebotenen Kommunikations-Leistungsmerkmale unabhängig vom Aufenthaltsort des Mitarbeiters notwendig ist. Zu diesen Leistungsmerkmalen zählen die zusätzlich zu den standardmäßig in einem ISDN-Kommunikationsnetz bereitgestellten Leistungsmerkmale, wie beispielsweise eine Signalisierung eines eingehenden Anrufs an einer Anrufübernahmegruppe.

Aus der europäischen Offenlegungsschrift EP 0 939 537 A2 ist beispielsweise ein Verfahren zum Bereitstellen von durch eine Kommunikationsanlage für interne Kommunikationseinrichtungen realisierten Leistungsmerkmalen für Heimarbeiter - im weiteren mit Teleworker bezeichnet - über ein Kommunikationsnetz bekannt. Hierbei wird nach einem Anmelden des Teleworkers an der Kommunikationsanlage eine Datenverbindung zwischen der dem Teleworker zugeordneten Kommunikationseinrichtung und der Kommunikationsanlage eingerichtet. Bis zu einem Abmelden des Teleworkers werden zwischen der Kommunikationsanlage und der Kommunikationseinrichtung über die Datenverbindung endgeräteorientierte Signalisierungsinformationen, wie sie üblicherweise im Rahmen eines Signalisierungsprotokolls zwischen internen Kommunikationseinrichtungen und der Kommunikationsanlage zur Verfügung stehen, übermittelt. Hierfür ist es jedoch notwendig, daß die Kommunikationseinrichtung für eine Verarbeitung dieser endgeräteorientierten Signalisierungsinformationen speziell ausgestaltet ist, oder über eine die endgeräteorientierten Signalisierungsinformationen entsprechend umsetzende Einrichtung - beispielsweise eine Datenverarbeitungseinrichtung - mit dem Kommunikationsnetz verbunden ist.

Aus der Druckschrift DE 196 40 266 A1 Wille "Kommunikationssystem aus mindestens zwei Nebenstellenanlagen mit Teamfunktion" ist bereits eine Anordnung bekannt, bei der die Kommunikationsendgeräte einzelner Mitglieder einer Teamfunktion (z.B. Chef-Sekretär-Schaltung) an einem weiteren vermittlungsknoten desselben privaten Netzverbundes angeschlossen sind. Dabei wird für jedes dieser "abgesetzten" Kommunikationsendgeräte dauerhaft eine "Hotline"-Verbindung zwischen den beteiligten Vermittlungsknoten geschaltet, wobei die für die "abgesetzten" Kommunikationsendgeräte bestimmten Signalisierungsinformationen transparent von dem Vermittlungsknoten mit der Teamfunktion zu dem weiteren Vermittlungsknoten und dort "abgesetzten" Kommunikationsendgeräten übermittelt werden und umgekehrt.

Eine Signalisierung eines, an einer dem Teleworker im Unternehmen zugeordneten Anrufübernahmegruppe eingehenden Rufs über das Kommunikationsnetz an einer externen, dem Teleworker zugeordneten Kommunikationseinrichtung ist jedoch nicht möglich, da hierbei ein Zugriff auf - die Konfigurierung der Anrufübernahmegruppe definierende - Informationen notwendig ist, die ausschließlich lokal in einer Datenbasis der Kommunikationsanlage gespeichert sind und in den bekannten Kommunikationsnetz-Signalisierungsprotokollen keine Elemente zur Übermittlung derartiger Informationen vorgesehen sind.

Der vorliegenden Erfindung liegt die Aufgabe zugrunde, ein Verfahren anzugeben, durch welches eine netzweite Signalisierung eines an einer Anrufübernahmegruppe eingehenden Rufs ermöglicht wird.

Die Lösung dieser Aufgabe erfolgt erfindungsgemäß mit den Merkmalen des Patentanspruchs 1.

Um an einem externen Kommunikationsendgerät einen an einer Anrufübernahmegruppe einer ersten Kommunikationsanlage eingehenden Ruf signalisieren zu können, wird für die in der Anrufübernahmegruppe eingerichteten Kommunikationsendgeräte jeweils eine Rufzuschaltung zu einem fiktiven Anschlußport - in der Literatur auch häufig als Pseudoport bezeichnet - der ersten Kommunikationsanlage eingerichtet. Der fiktive Anschlußport ist dabei ein rein logisch vorhandener, d.h. nur verwaltungstechnisch eingerichteter, keine Hardwarekomponenten aufweisender Anschlußport. Des weiteren wird für den fiktiven Anschlußport der ersten Kommunikationsanlage eine Anrufumleitung zu einem weiteren fiktiven Anschlußport einer zweiten, einen Anschluß des externen Kommunikationsendgerätes an das Kommunikationsnetz realisierenden Kommunikationsanlage eingerichtet. In der zweiten Kommunikationsanlage ist der weitere fiktive Anschlußport gemeinsam mit dem externen Kommunikationsendgerät zu einer weiteren Anrufübernahmegruppe konfiguriert.

Bei einem an der Anrufübernahmegruppe eingehenden Ruf erfolgt durch die Rufzuschaltung zusätzlich zur Rufsignalisierung an den der Anrufübernahmegruppe zugeordneten Kommunikationsendgeräten eine Rufsignalisierung, d.h. eine Übermittlung einer entsprechenden Verbindungsaufbaumeldung 'SETUP', am fiktiven Anschlußport der ersten Kommunikationsanlage. Diese Rufsignalisierung, d.h. die Verbindungsaufbaumeldung 'SETUP' wird durch die für den fiktiven Anschlußport aktivierte Anrufumleitung an den weiteren fiktiven Anschlußport der zweiten Kommunikationsanlage umgeleitet. Durch die Konfigurierung des weiteren fiktiven Anschlußports in der weiteren Anrufübernahmegruppe erfolgt eine anrufübernahmespezifische Rufsignalisierung am externen Kommunikationsendgerät bei der eine den weiteren fiktiven Anschlußport der zweiten Kommunikationsanlage identifizierende Information auf einer Anzeigeeinheit des externen Kommunikationsendgerätes optisch angezeigt oder eine entsprechende Ansage an einem Lautsprecher des externen Kommunikationsendgerätes ausgegeben wird.

Ein wesentlicher Vorteil der Erfindung besteht darin, daß die Signalisierung des an einer Anrufübernahmegruppe eingehenden Rufes am externen Kommunikationsendgerät durch standardmäßig in den Kommunikationsanlagen bzw. dem Kommunikationsnetz vorhandene Leistungsmerkmale wie Rufzuschaltung und Anrufumleitung realisiert wird, wodurch das erfindungsgemäße Verfahren auf einfache Weise in bereits bestehende Systeme integrierbar ist.

Vorteilhafte Weiterbildungen der Erfindung sind in den Unteransprüchen angegeben.

Ein Vorteil von Ausgestaltungen der Erfindung besteht unter anderem darin, daß durch ein Zuweisen einer die in der ersten Kommunikationsanlage eingerichtete Anrufübernahmegruppe identifizierenden Identifikation zu dem weiteren fiktiven Anschlußport der zweiten Kommunikationsanlage, wobei die Identifikation bei der anrufübernahmespezifischen Rufsignalisierung am externen Kommunikationsendgerät optisch an einem Display bzw. akustisch über einen Lautsprecher ausgegeben wird, der am externen Kommunikationsendgerät signalisierte Ruf durch den Teleworker sofort als ein der Anrufübernahmegruppe zugeordneter Ruf identifiziert werden kann.

Gemäß einer Ausgestaltung der Erfindung wird jeweils eine Rufzuschaltung für die der Anrufübernahmegruppe zugeordneten Kommunikationsendgeräte zu jeweils einem endgeräteindividuellen fiktiven Anschlußport der ersten Kommunikationsanlage und jeweils eine Anrufumleitung von den endgeräteindividuellen fiktiven Anschlußports der ersten Kommunikationsanlage auf jeweils einen weiteren endgeräteindividuellen fiktiven Anschlußport der zweiten Kommunikationsanlage eingerichtet. Die weiteren teilnehmerindividuellen fiktiven Anschlußports der zweiten Kommunikationsanlage werden abschließend zusammen mit dem externen Kommunikationsendgerät in der weiteren Anrufübernahmegruppe konfiguriert. Bei diesem Verfahren wird durch die Anzeige einer, dem jeweiligen endgeräteindividuellen fiktiven Anschlußport zugeordneten Identifikation eine Identifikation des innerhalb der Anrufübernahmegruppe gerufenen Teilnehmers am externen Kommunikationsendgerät auf einfache Weise ermöglicht.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten;
- Fig. 2:: ein Ablaufdiagramm zur Veranschaulichung der beim erfindungsgemäßen Verfahren ablaufenden wesentlichen Verfahrensschritte.

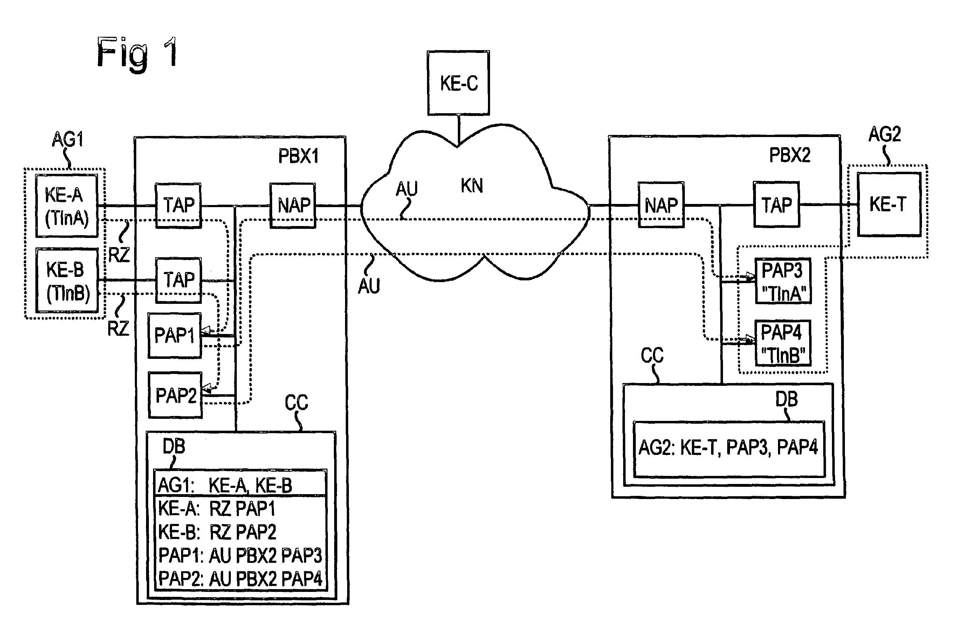

Fig. 1 zeigt eine erste und eine zweite Kommunikationsanlage PBX1, PBX2 die jeweils über eine Netzanschlußeinheit NAP mit einem Kommunikationsnetz KN verbunden sind. Das Kommunikationsnetz KN kann beispielsweise ein ISDN-Kommunikationsnetz oder ein firmeninternes Kommunikationsnetz mit einem proprietären Übertragungsprotokoll sein. Des weiteren ist an das Kommunikationsnetz KN ein Kommunikationsendgerät KE-C angeschlossen.

An der ersten Kommunikationsanlage PBX1 ist jeweils über einen Teilnehmeranschlußport TAP ein erstes Kommunikationsendgerät KE-A und ein zweites Kommunikationsendgerät KE-B angeschlossen. Das erste Kommunikationsendgerät KE-A ist einem ersten Teilnehmer TlnA und das zweite Kommunikationsendgerät KE-B einem zweiten Teilnehmer TlnB zugeordnet. Das erste und das zweite Kommunikationsendgerät KE-A, KE-B sind gemeinsam in einer ersten Anrufübernahmegruppe AG1 zusammengefaßt. Die Konfiguration der ersten Anrufübernahmegruppe AG1, d.h. die Festlegung welche Kommunikationsendgeräte in der ersten Anrufübernahmegruppe AG1 zusammengefaßt sind, wird in einer Datenbasis DB der zentralen Steuereinheit CC der ersten Kommunikationsanlage PBX1 durch eine die Konfiguration beschreibende Information AG1: KE-A, KE-B gespeichert. Durch das bekannte Leistungsmerkmal Anrufübernahme wird ein an einem der Anrufübernahmegruppe zugeordneten Kommunikationsendgerät eingehender Ruf an den anderen, ebenfalls der Anrufübernahmegruppe zugeordneten Kommunikationsendgeräten signalisiert und kann an diesen entgegengenommen werden. Im vorliegenden Ausführungsbeispiel wird im Rahmen der ersten Anrufübernahmegruppe AG1 ein am ersten Kommunikationsendgerät KE-A eingehender Ruf ebenfalls am zweiten Kommunikationsendgerät KE-B signalisiert und kann an diesem entgegengenommen werden. Ebenso wird ein am zweiten Kommunikationsendgerät KE-B eingehender Ruf am ersten Kommunikationsendgerät KE-A signalisiert und kann an diesem entgegengenommen werden.

Zusätzlich zu den Teilnehmeranschlußports TAP sind in der ersten Kommunikationsanlage PBX1 ein erster fiktiver Anschlußport PAP1 und ein zweiter fiktiver Anschlußport PAP2 eingerichtet. Die fiktiven Anschlußports PAP1, PAP2 - in der Literatur häufig auch als Pseudoports bezeichnet - sind dabei rein logisch vorhandene, d.h. in der zentralen Steuereinheit CC der ersten Kommunikationsanlage PBX1 nur verwaltungstechnisch eingerichtete, keine Hardwarekomponenten aufweisende Anschlußports.

An der zweiten Kommunikationsanlage PBX2 ist über einen Teilnehmeranschlußport TAP ein drittes, beispielsweise einem Teleworker zugeordnetes Kommunikationsendgerät KE-T angeschlossen. Analog zur ersten Kommunikationsanlage PBX1 sind in der zweiten Kommunikationsanlage PBX2 ein dritter fiktiver Anschlußport PAP3 und ein vierter fiktiver Anschlußport PAP4 eingerichtet. Das dritte Kommunikationsendgerät KE-T und der dritte und vierte fiktive Anschlußport PAP3, PAP4 werden gemeinsam zu einer zweiten Anrufübernahmegruppe AG2 zusammengefaßt. Die Konfiguration der zweiten Anrufübernahmegruppe AG2, d.h. die Festlegung welche Kommunikationsendgeräte in der zweiten Anrufübernahmegruppe AG2 zusammengefaßt sind, wird in einer Datenbasis DB der zentralen Steuereinheit CC der zweiten Kommunikationsanlage PBX2 durch eine die Konfiguration beschreibende Information AG2: KE-C, PAP1, PAP2 gespeichert. Dem dritten und vierten fiktiven Anschlußport PAP3, PAP4 ist jeweils eine Identifikation "TlnA", "TlnB" zugeordnet. Somit wird bei einer erfolgenden Rufsignalisierung an einem der fiktiven Anschlußports PAP1, PAP2 durch die Konfiguration in der zweiten Anrufübernahmegruppe AG2 die entsprechende Identifikation "TlnA", "TlnB" jeweils an den, der zweiten Anrufübernahmegruppe AG2 zugeordneten Kommunikationsendgeräten - d.h. im vorliegenden Ausführungsbeispiel am dritten Kommunikationsendgerät KE-T - angezeigt.

In der ersten Kommunikationsanlage PBX1 ist nun für das erste Kommunikationsendgerät KE-A eine Rufzuschaltung RZ zum ersten fiktiven Anschlußport PAP1 und für das zweite Kommunikationsendgerät KE-B eine Rufzuschaltung RZ zum zweiten fiktiven Anschlußport PAP2 (durch die gestrichelten Linien angedeutet) eingerichtet. Bei einem eingehenden Ruf am ersten bzw. zweiten Kommunikationsendgerät KE-A, KE-B erfolgt somit eine Rufsignalisierung - d.h. eine Übermittlung einer entsprechenden Verbindungsaufbaumeldung 'SETUP' - am ersten bzw. zweiten Kommunikationsendgerät KE-A, KE-B und zusätzlich am ersten bzw. zweiten fiktiven Anschlußport PAP1, PAP2 der ersten Kommunikationsanlage PBX1. Die Rufzuschaltung RZ des ersten Kommunikationsendgerätes KE-A auf den ersten fiktiven Anschlußport PAP1 und die Rufzuschaltung RZ des zweiten Kommunikationsendgerätes KE-B auf den zweiten fiktiven Anschlußport PAP2 wird in der Datenbasis DB der zentralen Steuereinheit CC der ersten Kommunikationsanlage PBX1 durch jeweils eine die Rufzuschaltung RZ definierende Information KE-A: RZ PAP1, KE-B: RZ PAP2 gespeichert.

Des weiteren ist in der ersten Kommunikationsanlage PBX1 für den ersten fiktiven Anschlußport PAP1 eine Anrufumleitung AU zum dritten fiktiven Anschlußport PAP3 der zweiten Kommunikationsanlage PBX2 und für den zweiten fiktiven Anschlußport PAP2 eine Anrufumleitung AU zum vierten fiktiven Anschlußport PAP4 der zweiten Kommunikationsanlage PBX2 (durch die gestrichelten Linien angedeutet) eingerichtet. Eine am ersten bzw. zweiten fiktiven Anschlußport PAP1, PAP2 zu erfolgende Rufsignalisierung wird somit über das Kommunikationsnetz KN an den dritten bzw. vierten fiktiven Anschlußport PAP3, PAP4 der zweiten Kommunikationsanlage PBX2 umgeleitet. Die Anrufumleitung AU des ersten fiktiven Anschlußports PAP1 auf den dritten fiktiven Anschlußport PAP3 und die Anrufumleitung des zweiten fiktiven Anschlußports PAP2 auf den vierten fiktiven Anschlußport PAP4 wird in der Datenbasis DB der zentralen Steuereinheit CC der ersten Kommunikationsanlage PBX1 durch jeweils eine die Anrufumleitung AU definierende Information PAP1: AU PBX2 PAP3, PAP2: AU PBX2 PAP4 gespeichert.

Bei einem am ersten bzw. am zweiten Kommunikationsendgerät KE-A, KE-B eingehenden Ruf wird somit zusätzlich eine Rufsignalisierung - d.h. eine Übermittlung einer entsprechenden Verbindungsaufbaumeldung 'SETUP' - an dem entsprechenden fiktiven Anschlußport PAP1, PAP2 der ersten Kommunikationsanlage PBX1 veranlaßt. Durch die für den entsprechenden fiktiven Anschlußport PAP1, PAP2 eingerichtete Anrufumleitung AU wird die Rufsignalisierung an den entsprechenden fiktiven Anschlußport PAP3, PAP4 der zweiten Kommunikationsanlage PBX2 umgeleitet. An der zweiten Kommunikationsanlage PBX2 erfolgt nun durch die Konfiguration des entsprechenden fiktiven Anschlußport PAP3, PAP4 in der zweiten Anrufübernahmegruppe AG2 eine Rufsignalisierung am dritten Kommunikationsendgerät KE-T mit der, dem entsprechenden fiktiven Anschlußport PAP3, PAP4 zugehörigen Identifikation "TlnA", "TlnB".

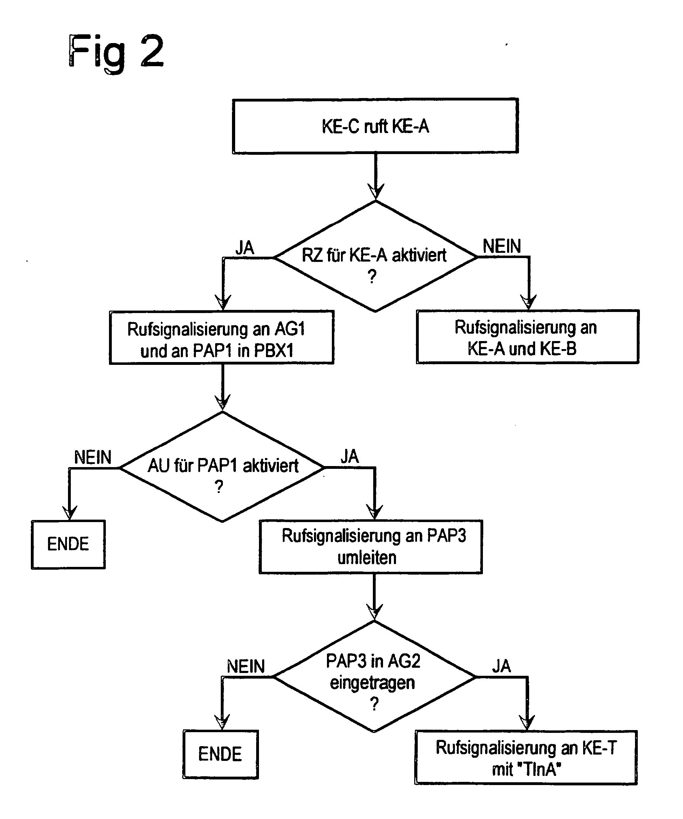

Fig. 2 zeigt ein Ablaufdiagramm mit den wesentlichen, bei einem Verbindungsaufbau mit dem ersten Kommunikationsendgerät KE-A ablaufenden Verfahrensschritten. Bei einem von dem am Kommunikationsnetz KN angeschlossenen Kommunikationsendgerät KE-C veranlaßten Verbindungsaufbau mit dem ersten Kommunikationsendgerät KE-A wird überprüft, ob für das erste Kommunikationsendgerät KE-A eine Rufzuleitung RZ aktiviert ist. Ist dies nicht der Fall, erfolgt eine Rufsignalisierung ausschließlich an den, der ersten Anrufübernahmegruppe AG1 zugeordneten Kommunikationsendgeräten, d.h. im vorliegenden Ausführungsbeispiel am ersten und am zweiten Kommunikationsendgerät KE-A, KE-B. Ist dagegen eine Rufzuleitung RZ für das erste Kommunikationsendgerät KE-A aktiviert, so wird zusätzlich eine Rufsignalisierung am ersten fiktiven Anschlußport PAP1 der ersten Kommunikationsanlage PBX1 veranlaßt, d.h. es wird zusätzlich eine entsprechende Verbindungsaufbaumeldung 'SETUP' an den ersten fiktiven Anschlußport PAP1 der ersten Kommunikationsanlage PBX1 übermittelt.

In einem nächsten Schritt wird durch die erste Kommunikationsanlage PBX1 überprüft, ob für den ersten fiktiven Anschlußport PAP1 eine Anrufumleitung AU aktiviert ist. Ist dies nicht der Fall, wird das Verfahren beendet. Ist eine Anrufumleitung aktiviert, wird die Rufsignalisierung, d.h. die Verbindungsaufbaumeldung 'SETUP' über das Kommunikationsnetz KN an den dritten fiktiven Anschlußport PAP3 der zweiten Kommunikationsanlage PBX2 umgeleitet. In der zweiten Kommunikationsanlage PBX2 wird bei einer am dritten fiktiven Anschlußport PAP3 eingehenden Rufsignalisierung überprüft, ob der fiktive Anschlußport PAP3 in einer Anrufübernahmegruppe, d.h. im vorliegenden Ausführungsbeispiel in der zweiten Anrufübernahmegruppe AG2 konfiguriert ist. Ist dies nicht der Fall, wird das Verfahren beendet. Ist der dritte fiktive Anschlußport PAP3 in der zweiten Anrufübernahmegruppe AG2 konfiguriert, erfolgt eine anrufübernahmespezifische Rufsignalisierung am dritten, dem Teleworker zugeordneten Kommunikationsendgerät KE-T. Hierbei wird einerseits die Rufnummer des am Kommunikationsnetz KN angeschlossenen Kommunikationsendgerätes KE-C und die dem dritten fiktiven Anschlußport PAP3 zugeordnete Identifikation "TlnA" am Display des dritten Kommunikationsendgerätes KE-C angezeigt. Alternativ können diese Informationen auch an einem Lautsprecher des dritten Kommunikationsendgerätes KE-T akustisch ausgegeben werden. Somit kann der Teleworker auf einfache Weise erkennen, daß der ankommende Ruf ein für den in der ersten Anrufübernahmegruppe AG1 konfigurierten ersten Teilnehmer TlnA bestimmter Ruf ist.

Als vereinfachte Ausführung des Verfahren kann alternativ zum Einrichten mehrerer, jeweils einem Kommunikationsendgerät KE-A, KE-B zugeordneter, endgeräteindividueller fiktiver Anschlußports PAP1, PAP2 in der ersten Kommunikationsanlage PBX1 nur ein einzelner, allen der ersten Anrufübernahmegruppe AG1 zugeordneten Kommunikationsendgeräten KE-A, KE-B gemeinsamer fiktiver Anschlußport PAP vorgesehen werden. Hierbei erfolgt für jedes in der ersten Anrufübernahmegruppe AG1 konfigurierte Kommunikationsendgerät KE-A, KE-B eine Rufzuleitung RZ auf den selben fiktiven Anschlußport PAP der ersten Kommunikationsanlage PBX1. Für diesen fiktiven Anschlußport PAP der ersten Kommunikationsanlage PBX1 wird eine Anrufumleitung AU auf einen einzelnen fiktiven Anschlußport PAP der zweiten Kommunikationsanlage PBX2 aktiviert. Diesem fiktiven Anschlußport PAP der zweiten Kommunikationsanlage PBX2 wird dabei eine die erste Anrufübernahmegruppe AG1 identifizierende Identifikation, z.B. "Anrufgruppe" zugeordnet. In der zweiten Anrufübernahmegruppe AG2 wird folglich nur das dritte Kommunikationsendgerät KE-T und der fiktive Anschlußport PAP der zweiten Kommunikationsanlage PBX2 konfiguriert. Bei einem am ersten bzw. zweiten Kommunikationsendgerät KE-A, KE-B eingehenden Ruf wird somit am dritten Kommunikationsendgerät KE-T nur der Rufeingang an der ersten Anrufübernahmegruppe AG1 mittels der zugeordneten Identifikation "Anrufgruppe" signalisiert. Eine Identifikation des gerufenen Teilnehmers TlnA, TlnB innerhalb der ersten Anrufübernahmegruppe AG1 ist nicht möglich.

## Patentansprüche

1. Verfahren zur Signalisierung eines an einer Anrufübernahmegruppe (AG1) eingehenden Rufs an einem externen Kommunikationsendgerät (KE-T), wobei die Anrufübernahmegruppe (AG1) in einer ersten Kommunikationsanlage (PBX1) eingerichtet ist, das externe Kommunikationsendgerät (KE-T) an einer zweiten Kommunikationsanlage (PBX2) angeschlossen ist, und wobei die erste Kommunikationsanlage (PBX1) und die zweite Kommunikationsanlage über ein Kommunikationsnetz (KN) miteinander verbunden sind,
a) bei dem für die, der Anrufübernahmegruppe (AG1) zugeordneten Kommunikationsendgeräte (KE-A, KE-B) jeweils eine Rufzuschaltung (RZ) zu mindestens einem fiktiven Anschlussport (PAP, PAP1, PAP2) der ersten Kommunikationsanlage (PBX1) eingerichtet wird,
b) bei dem eine Anrufumleitung (AU) von dem mindestens einen fiktiven Anschlussport (PAP, PAP1, PAP2) der ersten Kommunikationsanlage (PBX1) auf mindestens einen fiktiven Anschlussport (PAP, PAP3, PAP4) der zweiten Kommunikationsanlage (PBX2) eingerichtet wird,
c) bei dem in der zweiten Kommunikationsanlage (PBX2) eine weitere Anrufübernahmegruppe (AG2) mindestens bestehend aus dem mindestens einen fiktiven Anschlussport (PAP, PAP3, PAP4) der zweiten Kommunikationsanlage (PBX2) und dem externen Kommunikationsendgerät (KE-T) eingerichtet wird, und
d) bei dem der mindestens eine fiktive Anschlussport (PAP, PAP3, PAP4) in der weiteren Anrufübernahmegruppe (AG2) so konfiguriert ist, dass bei einem an der Anrufübernahmegruppe (AG1) eingehenden Anruf eine dem mindestens einen weiteren fiktiven Anschlussport (PAP, PAP3, PAP4) der zweiten Kommunikationsanlage (PBX2) zugeordnete Information zur Identifikation der Anrufübernahmegruppe (AG1) oder eines der Kommunikationsendgeräte (KE-A, KE-B) der Anrufübernahmegruppe (AG1) am externen Kommunikationsendgerät (KE-T) ausgegeben wird.

2. Verfahren nach Anspruch 1,
**dadurch gekennzeichnet,**
**daß** dem mindestens einen fiktiven Anschlußport (PAP) der zweiten Kommunikationsanlage (PBX2) eine die Anrufübernahmegruppe (AG1) identifizierende Identifikation ("Anrufgruppe") zugeordnet wird.

3. Verfahren nach Anspruch 1,
**dadurch gekennzeichnet,**
**daß** für die der Anrufübernahmegruppe (AG1) zugeordneten Kommunikationsendgeräte (KE-A, KE-B) jeweils eine Rufzuschaltung (RZ) zu jeweils einem endgeräteindividuellen fiktiven Anschlussport (PAP1, PAP2) der ersten Kommunikationsanlage (PBX1) eingerichtet wird,
**dass** jeweils eine Anrufumleitung (AU) von den endgeräteindividuellen fiktiven Anschlussports (PAP1, PAP2) der ersten Kommunikationsanlage (PBX1) auf jeweils einen endgeräteindividuellen fiktiven Anschlussport (PAP3, PAP4) der zweiten Kommunikationsanlage (PBX2) eingerichtet wird, und
**dass** die weitere Anrufübernahmegruppe (AG2) bestehend aus den teilnehmerindividuellen fiktiven Anschlussports (PAP3, PAP4) der zweiten Kommunikationsanlage (PBX2) und dem externen Kommunikationsendgerät (KE-T) eingerichtet wird.

4. Verfahren nach Anspruch 3,
**dadurch gekennzeichnet,**
**daß** den fiktiven Anschlussports (PAP3, PAP4) der zweiten Kommunikationsanlage (PBX2) jeweils eine das zugehörige Kommunikationsendgerät (KE-A, KE-B) der Anrufübernahmegruppe (AG1) identifizierende Identifikation ("TlnA", "TlnB") zugeordnet wird.

5. Verfahren nach Anspruch 2 oder 4,
**dadurch gekennzeichnet,**
**daß** bei einem eingehenden Ruf an einem der Anrufübernahmegruppe (AG1) zugeordneten Kommunikationsendgeräte (KE-A, KE-B) die zugehörige Identifikation ("TlnA", "TlnB") am externen Kommunikationsendgerät (KE-T) optisch und/oder akustisch ausgegeben wird.

6. Verfahren nach Anspruch 5,
**dadurch gekennzeichnet,**
**daß** zusätzlich zur Identifikation ("TlnA", "TlnB") eine das rufende Kommunikationsendgerät (KE-C) identifizierende Information am externen Kommunikationsendgerät (KE-T) ausgegeben wird.

## Claims

1. Method for signalling an incoming call in a call accepting group (AG1) on an external communications terminal (KE-T), wherein the call accepting group (AG1) is set up in a first communications system (PBX1) and the external communications terminal (KE-T) is connected to a second communications system (PBX2), and wherein the first communications system (PBX1) and the second communications system are connected to one another over a communications network (KN),
a) in which a call connection (RZ) to at least one virtual connection port (PAP, PAP1, PAP2) of the first communications system (PBX1) is respectively set up for the communications terminals (KE-A, KE-B) assigned to the call accepting group (AG1),
b) in which a call forwarding (AU) is set up from the at least one virtual connection port (PAP, PAP1, PAP2) of the first communications system (PBX1) to at least one virtual connection port (PAP, PAP3, PAP4) of the second communications system (PBX2),
c) in which a further call accepting group (AG2) at least consisting of the at least one virtual connection port (PAP, PAP3, PAP4) of the second communications system (PBX2) and the external communications terminal (KE-T) is set up in the second communications system (PBX2), and
d) in which the at least one virtual connection port (PAP, PAP3, PAP4) in the further call accepting group (AG2) is configured in such a way that, in the event of an incoming call in the call accepting group (AG1), an item of information assigned to the at least one further virtual connection port (PAP, PAP3, PAP4) of the second communications system (PBX2) and designed to identify the call accepting group (AG1) or one of the communications terminals (KE-A, KE-B) of the call accepting group (AG1) is output on the external communications terminal (KE-T).

2. Method according to claim 1, **characterised in that** an identification ("call group") which identifies the call accepting group (AG1) is assigned to the at least one virtual connection port (PAP) of the second communications system (PBX2).

3. Method according to claim 1, **characterised in that** a call connection (RZ) to a respective terminal-specific virtual connection port (PAP1, PAP2) of the first communications system (PBX1) is respectively set up for the communications terminals (KE-A, KE-B) assigned to the call accepting group (AG1),
**in that** a call forwarding (AU) is respectively set up from the terminal-specific virtual connection ports (PAP1, PAP2) of the first communications system (PBX1) to a respective terminal-specific virtual connection port (PAP3, PAP4) of the second communications system (PBX2), and
**in that** the further call accepting group (AG2) consisting of the subscriber-specific virtual connection ports (PAP3, PAP4) of the second communications system (PBX2) and the external communications terminal (KE-T) is set up.

4. Method according to claim 3, **characterised in that** an identification ("TlnA", "TlnB") which identifies the associated communications terminal (KE-A, KE-B) of the call accepting group (AG1) is respectively assigned to the virtual connection ports (PAP3, PAP4) of the second communications system (PBX2).

5. Method according to claim 2 or 4, **characterised in that**, in the event of an incoming call on a communications terminal (KE-A, KE-B) assigned to the call accepting group (AG1), the associated identification ("TlnA", "TlnB") is output optically and/or acoustically on the external communications terminal (KE-T).

6. Method according to claim 5, **characterised in that**, in addition to the identification ("TlnA", "TlnB"), an item of information which identifies the calling communications terminal (KE-C) is output on the external communications terminal (KE-T).

## Revendications

1. Procédé de signalisation d'un appel entrant au niveau d'un groupe de réception d'appel (AG1) sur un terminal de communication (KE-T) externe, sachant que le groupe de réception d'appel (AG1) est installé dans une première installation de communication (PBX1) et que le terminal de communication externe (KE-T) est raccordé à une deuxième installation de communication (PBX2), et sachant que la première installation de communication (PBX1) et la deuxième installation de communication sont reliées entre elles par l'intermédiaire d'un réseau de communication (KN),
a) dans le cadre duquel pour les terminaux de communication (KE-A, KE-B) associés au groupe de réception d'appel (AG1), respectivement une connexion d'appel (RZ) vers au moins un port de connexion fictif (PAP, PAP1, PAP2) de la première installation de communication (PBX1) est mise en place,
b) dans le cadre duquel une déviation d'appel (AU) du port de connexion (PAP, PAP1, PAP2) fictif au moins au nombre de un de la première installation de communication (PBX1) sur au moins un port de connexion (PAP, PAP3, PAP4) fictif de la deuxième installation de communication (PBX2) est mise en place,
c) dans le cadre duquel un autre groupe de réception d'appel (AG2) constitué au moins du port de connexion (PAP, PAP3, PAP4) fictif au moins au nombre de un de la deuxième installation de communication (PBX2) et du terminal de communication (KE-T) externe est mis en place dans la deuxième installation de communication (PBX2), et
d) dans le cadre duquel, le port de connexion (PAP, PAP3, PAP4) fictif au moins au nombre de un dans l'autre groupe de réception d'appel (AG2) est configuré de telle manière que dans le cas d'un appel entrant au niveau du groupe de réception d'appel (AG1), une information, qui est associée à l'autre port de connexion (PAP, PAP3, PAP4) fictif au moins au nombre de un de la deuxième installation de communication (PBX2) et qui sert à l'identification du groupe de réception d'appel (AG1) ou d'un des terminaux de communication (KE-A, KE-B) du groupe de réception d'appel (AG1), est délivrée au niveau du terminal de communication externe (KE-T).

2. Procédé selon la revendication 1,
**caractérisé en ce**
**qu'**une identification identifiant le groupe de réception d'appel (AG1) (groupe d'appel) est associée au port de connexion (PAP) fictif au moins au nombre de un de la deuxième installation de communication (PBX2).

3. Procédé selon la revendication 1,
**caractérisé en ce**
**que** respectivement une connexion d'appel (RZ) vers respectivement un port de connexion (PAP1, PAP2) fictif propre au terminal de la première installation de communication (PBX1) est mise en place pour les terminaux de communication (KE-A, KE-B) associés au groupe de réception d'appel (AG1),
en ce que respectivement une déviation d'appel (AU) des ports de connexion (PAP1, PAP2) fictif propres à chaque terminal de la première installation de communication (PBX1) sur respectivement un port de connexion (PAP3, PAP4) fictif propre à chaque terminal de la deuxième installation de communication (PBX2) est mise en place, et
en ce que l'autre groupe de réception d'appel (AG2) constitué des ports de connexion (PAP3, PAP4) fictifs propres à l'abonné de la deuxième installation de communication (PBX2) et du terminal de communication (KE-T) externe est mis en place.

4. Procédé selon la revendication 3,
**caractérisé en ce**
**que** respectivement une identification (« TlnA », « TlnB ») identifiant le terminal de communication (KE-A, KE-B) associé du groupe de réception d'appel (AG1) est associée aux ports de connexion (PAP3, PAP4) fictifs de la deuxième installation de communication (PBX2).

5. Procédé selon la revendication 2 ou 4,
**caractérisé en ce**
**que** dans le cas d'un appel entrant sur un des terminaux de communication (KE-A, KE-B) associés au groupe de réception d'appel (AG1), l'identification (« TlnA », « TlnB ») associée est délivrée au niveau du terminal de communication (KE-T) externe de manière optique et/ou acoustique.

6. Procédé selon la revendication 5,
**caractérisé en ce**
**qu'**outre l'identification (« TlnA », « TlnB »), une information identifiant le terminal de communication (KE-C) appelant est délivrée au niveau du terminal de communication (KE-T) externe.
